# EUROPEAN PATENT SPECIFICATION

(11) **EP 3 874 099 B1**
(45) Date of publication and mention of the grant of the patent: **29.11.2023**
(21) Application number: 19879127.9
(22) Date of filing: 10.10.2019
(51) Int. Cl.: E04B 9/06, E04F 15/08, E04F 15/20, F16M 13/00, F16F 1/376, F16F 1/373, E04B 2/76, E04B 2/74, E04B 1/38, E04B 1/62, E04F 13/21, E04F 13/08, E04B 9/22, E04B 9/18, E04B 9/00, E04B 1/82, F16B 7/18

(54) **CLIP INSULATION AND ASSEMBLY**
CLIPISOLIERUNG UND -ANORDNUNG
ISOLATION D'AGRAFE ET ENSEMBLE AGRAFE

(30) Priority: 29.10.2018 AU 2018101624; 11.12.2018 AU 2018102052
(43) Date of publication of application: 08.09.2021
(73) Proprietor: Rocheway Pty Ltd, Bulimba, Brisbane QLD 4171 (AU)
(72) Inventor: POTTER, Graeme, Bulimba, Brisbane QLD 4171 (AU)
(74) Representative: Greaves Brewster LLP
(86) International application number: PCT/AU2019/051098
(87) International publication number: WO 2020/087105

(56) References cited:
- US-A- 3 903 671
- US-A1- 2008 086 966
- US-A1- 2015 369 323
- US-A1- 2017 044 773
- US-B1- 6 267 347
- Anonymous: "M237 TR Data Sheet from Studco Building Systems", resilmount , 1 November 2009 (2009-11-01), pages 1-1, XP055706506, Retrieved from the Internet: URL:http://www.resilmount.com.au/assets/de fault-site/RESILMOUNT-M237TR-Datasheet.pdf [retrieved on 2019-12-19]
- Anonymous: "Acoustic Assemblies", Rondo , 14 March 2018 (2018-03-14), pages 1-3, XP055809855, Retrieved from the Internet: URL:https://www.rondo.com.au/products/acou stic-assemblies [retrieved on 2019-11-18]

## Description

### FIELD OF INVENTION

The present invention relates to clip insulation. The present invention has particular but not exclusive application for clips mounting a furring channel onto a support structure such as existing building wall or ceiling structures to provide a furring support framework for wall or ceiling cladding. The patent specification describes this use but it is by way of example only and the invention is not limited to this use.

### BACKGROUND OF THE INVENTION

Walls and ceilings of buildings are sometimes clad with wall or ceiling cladding to provide an aesthetical appearance, or to cover utilities such as power cables, water pipes, HVAC ducts or the like.

The wall or ceiling cladding is typically secured to the existing wall or ceiling by a support framework of furring channels. The wall or ceiling cladding is typically secured to the furring channels using fasteners such as screws. The furring channels are attached to the wall or ceiling by clips (also referred to as furring channel clips) which are attached on to the wall or ceiling in a spaced apart manner. The furring channels are secured to the clips by positioning them over and snapping them into the clips.

One problem that can arise from such a configuration is a lack of space to accommodate utilities. A prior art solution to this problem is to provide a furring channel of greater thickness.

Another problem that can arise by securing the clips to the wall or ceiling and the wall or ceiling cladding to the furring channels is that vibrations and noise can travel from the wall or ceiling to the wall or ceiling cladding.

One prior art solution to mitigating the transmission of vibration or sound is to provide an underlay between the clip and the wall or ceiling and/or between the wall or ceiling cladding and the furring channel.

Known in the art is United States patent US 2015/369323 A1 (Downey et al) which discloses an energy transmission control mount comprising a carrier having a first major surface, an opposite second major surface and an aperture provided therein.

Known in the art is United States patent US 3 903 671 A1 (Cuin et al) which discloses lining systems for building surfaces such as walls or ceilings wherein the structure uses at least two spaced parallel rails, adjustable connectors sliding on the rails and panel attachment members secured to the rails by the connectors and serving to support facing panels, for example gypsum wall boards.

Known in the art are furring channel to top cross rail mounts as described in the publication "M237 TR Data Sheet from Studco Building Systems" by Studco Building Systems Pty Ltd dated 1 November 2009.

Known in the art are acoustic mounts that are used with wall and ceiling system as described in the publication "Acoustic Assemblies" by Rondo Building Services Pty Ltd dated 14 March 2018.

Known in the art is United States patent US 2008/086966 A1 (Stevens et al) which discloses a clip assembly according to the preamble of claim 1 comprising an acoustic mount for dampening vibrations between two structures mounted or coupled in use to each other. The mount includes a vibration dampening member having a first portion, a neck and a second portion.

Known in the prior art is United States patent US 6 267 347 B1 (Ryan et al) which discloses a device which drastically reduces transmission of low frequency vibrations from one region to another.

### OBJECT OF THE INVENTION

It is an object of the present invention to overcome or at least alleviate one or more of the abovementioned problems with furring channel clips and/or provide the consumer with a useful or commercial choice. This object is achieved by the clip assembly as defined in claim 1 and the clip insulation for this clip assembly as defined in claim 4.

### SUMMARY OF THE INVENTION

According to the invention, the clip insulation comprises
a substantially planar bed portion having two opposed ends, the bed portion adapted to at least cover a portion of an outer surface of the clip;
a plurality of projections extending from the bed portion; and
two opposed skirt portions, each skirt portion extending from an end of the bed portion, each skirt portion adapted to attach to an end of the clip.

The insulation member preferably includes elastic material to inhibit or reduce vibrations from passing therethrough. The insulation member preferably includes resilient material to inhibit or reduce vibrations from passing therethrough. The insulation member preferably includes a rubber or plastic material to inhibit or reduce vibrations from passing therethrough. More preferably the insulation member includes a rubber material to inhibit or reduce vibrations from passing therethrough.

In one embodiment, the insulation member is made by extrusion. In another embodiment, the insulation member is made by moulding or casting.

The bed portion is preferably substantially rectangular in shape. Preferably the bed portion includes an aperture. Preferably, the aperture of the bed portion aligns with an aperture of the clip in use. Preferably the aperture of the clip is located in a body portion of the clip. Preferably in use, a fastener such as a screw or a bolt can be inserted into the aperture of the bed portion and the aperture of the clip to secure the clip to a support structure.

Preferably in use, when the clip is attached relative to a support structure, the bed portion is located between the clip and the support structure.

In one embodiment, the insulation member includes a grommet extending from the bed portion. Preferably an aperture in the grommet defines the aperture in the bed portion. Preferably the grommet is adapted to be at least partially inserted into the aperture of the clip.

The grommet preferably includes elastic material to inhibit or reduce vibrations from passing therethrough. The grommet preferably includes resilient material to inhibit or reduce vibrations from passing therethrough. The grommet preferably includes a rubber or plastic material to inhibit or reduce vibrations from passing therethrough. More preferably the grommet includes a rubber material to inhibit or reduce vibrations from passing therethrough.

Preferably in use, the plurality of projections extend in a direction away from the clip. Preferably the plurality of projections extend at substantially 90° from the bed portion. Preferably the plurality of projections extend in substantially the opposite direction compared to the two opposed skirt portions. Preferably in use the plurality of projections provide additional insulation between a clip and a support member to which the clip is attached. In one embodiment, the plurality of projections are ribs. Preferably the ribs are parallel to one another. In another embodiment, the plurality of projections are knobs, nibs or lugs.

In one embodiment, the plurality of projections are between 3 and 16 projections. Preferably the plurality of projections are between 6 and 10 projections. More preferably the plurality of projections are 8 projections.

Preferably the two opposed skirt portions each define a recess to receive an end of the clip to hold the clip insulation in place on the clip. In one embodiment, each recess is defined between a corresponding skirt portion and the bed portion. Preferably each skirt portion is adapted to straddle an end of the clip to hold the insulation member in place on the clip.

Preferably each of the two opposed skirt portions extends at substantially 90° from the bed portion.

Preferably each of the two opposed skirt portions includes a ramp portion. Preferably each ramp portion aids in guiding an end of the clip into a corresponding recess.

The clip assembly according to the invention comprises
a clip having
   a body portion attachable relative to the support structure; and
   at least one connection portion extending transversely from the body portion, each of the at least one connection portion has two opposed connection positions adapted to connect to the furring channel; and
a clip insulation locatable between the clip and the support structure, the clip insulation having
   a substantially planar bed portion having two opposed ends, the bed portion adapted to at least cover a portion of an outer surface of the clip;
   a plurality of projections extending from the bed portion; and
   two opposed skirt portions, each skirt portion extending from an end of the bed portion, each skirt portion adapted to attach to an end of the clip.

Preferably in use, when the body portion is attached relative to the support structure, the bed portion and the plurality of projections are located between the support structure and the clip.

Preferably, the body portion of the clip is substantially planar. Preferably the body portion is substantially rectangular in shape. Preferably the body portion has two opposed sides and two opposed ends.

Preferably the body portion includes an aperture. The aperture is preferably adapted to receive a fastener such as a bolt or a screw. Preferably the fastener is adapted to attach the body portion relative to the support structure. Preferably the aperture is adapted to receive a grommet. More preferably the aperture is adapted to receive a grommet and a ferrule. Preferably the grommet and/or ferrule prevent direct contact between the body portion of the clip and the fastener.

Preferably each of the at least one connection portion extends at substantially 90° from the body portion. Preferably each of the at least one connection portion extends from a respective one of the two opposed sides of the body portion. Preferably the at least one connection portion is two connection portions. Preferably the two connection portions are opposed to one another. Preferably the two opposed connection portions extend from the two opposed sides of the body portion. Preferably each of the at least one connection portion is substantially planar.

Preferably each of the two opposed connection positions are defined by two opposed notches. Preferably the opposed notches are adapted to retain therein lips of a furring channel. Preferably each of the two opposed connection positions is located between 2mm to 45mm away from the body portion of the clip. More preferably, each of the two opposed connection positions is located between 5mm to 30mm away from the body portion of the clip. In one embodiment, each of the two opposed connection positions is located substantially 10mm away from the body portion of the clip. In another embodiment, each of the two opposed connection positions is located substantially 15mm away from the body portion of the clip. In a further embodiment, each of the two opposed connection positions is located substantially 20mm away from the body portion of the clip. In yet another embodiment, each of the two opposed connection positions is located substantially 25mm away from the body portion of the clip.

Preferably the clip is made from metal. Preferably the metal is bent or pressed into the shape of the clip. Preferably the metal is steel. Preferably the thickness of the metal is in the range of 0.5mm to 1.5mm. More preferably the thickness of the metal is substantially 1 mm.

Preferably the clip insulation is a clip insulation as described in this specification.

In one embodiment, the clip assembly includes a grommet adapted to be at least partially inserted into the aperture of the body portion.

The grommet preferably includes elastic material to inhibit or reduce vibrations from passing therethrough. The grommet preferably includes resilient material to inhibit or reduce vibrations from passing therethrough. The grommet preferably includes a rubber or plastic material to inhibit or reduce vibrations from passing therethrough. More preferably the grommet includes a rubber material to inhibit or reduce vibrations from passing therethrough.

The clip assembly preferably includes a ferrule. The ferrule is preferably adapted to be inserted into the aperture of the body portion. The ferrule preferably includes a rim portion adapted to prevent the ferrule from passing all the way through the aperture in the body portion. The ferrule is preferably adapted to be inserted into the aperture of the grommet. The ferrule is preferably adapted to accept a fastener to fasten the clip assembly to a support structure. Preferably in use the ferrule prevents the fastener from damaging the clip if the fastener is overtightened. Preferably the ferrule is made of metal. More preferably the ferrule is made of steel.

In a further aspect, the present invention broadly resides in a clip assembly for mounting a furring channel to a support structure, the clip assembly having
a clip having
   a body portion attachable relative to the support structure, the body portion having two opposed sides and two opposed ends; and
   two opposed connection portion extending transversely from corresponding sides of the body portion, each of the connection portions having two opposed connection positions adapted to connect to the furring channel; and
a clip insulation locatable between the clip and the support structure, the clip insulation having
a substantially planar bed portion having two opposed ends, the bed portion adapted to at least cover a portion of an outer surface of the body portion of the clip;
a plurality of projections extending from the bed portion; and
two opposed skirt portions, each skirt portion extending from an end of the bed portion, each skirt portion adapted to attach to an end of the clip.

Preferably in use, when the body portion is attached relative to the support structure, the bed portion and the plurality of projections are located between the support structure and the clip.

The clip is preferably a clip as described in this specification.

The clip insulation is preferably a clip insulation as described in this specification.
In another aspect, the present invention broadly resides in a clip assembly for mounting a furring channel to a support structure, the clip assembly having
a cross rail attachable relative to the support structure, the cross rail having two parallel channels;
a slide member receivable within the two parallel channels;
a clip having
   a body portion attachable relative to the slide member; and
   at least one connection portion extending transversely from the body portion, each of the at least one connection portion has two opposed connection positions adapted to connect to the furring channel; and
a clip insulation locatable between the clip and the cross rail, the clip insulation having
   a substantially planar bed portion having two opposed ends, the bed portion adapted to at least cover a portion of an outer surface of the clip;
   a plurality of projections extending from the bed portion; and
   two opposed skirt portions, each skirt portion extending from an end of the bed portion, each skirt portion adapted to attach to an end of the clip.

Preferably in use, when the body portion is attached relative to the cross rail, the bed portion and the plurality of projections are located between the cross rail and the clip.

Preferably, the body portion of the clip is substantially planar. Preferably the body portion is substantially rectangular in shape. Preferably the body portion has two opposed sides and two opposed ends.

Preferably the body portion includes an aperture. The aperture is preferably adapted to receive a fastener such as a bolt or a screw. Preferably the fastener is adapted to attach the body portion relative to the slide member. Preferably the aperture is adapted to receive a grommet.

Preferably the slide member includes an aperture. The aperture is preferably adapted to receive the fastener that attaches the body portion relative to the cross rail. In one embodiment, a washer or grommet spaces the fastener from the clip. Preferably the washer or grommet inhibits vibrations from moving from the cross rail to the clip. More preferably the washer or grommet in addition to the clip insulation inhibits vibrations from moving from the cross rail to the clip.

Preferably the aperture of the slide member is threaded. Preferably the threaded aperture is adapted to receive the threaded shaft of the fastener that attaches the body portion relative to the cross rail. Alternatively, the aperture of the slide member is shaped to prevent rotation of a fastener therein.

Preferably, tightening the fastener urges the body portion towards the slide member, securing the clip relative to the cross rail. Preferably, tightening the fastener causes the clip insulation to be partially compressed between the clip and the cross rail, securing the clip relative to the cross rail.

The slide member preferably includes two opposed leg portions. Preferably the two opposed leg portions are receivable within the two parallel channels.

The cross rail is preferably elongate. Preferably the two parallel channels run in a lengthwise direction. Preferably the cross rail includes an opening between the two parallel channels. Preferably the opening between the two parallel channels is adapted to accommodate the fastener attaching the clip to the slide member. Preferably the cross rail has a substantially 'C' shaped cross section. Preferably the cross rail has an enlarged cross section towards the side distal from the two parallel channels. Preferably the enlarged cross section is adapted to connect to a suspension clip which is adapted to secure the cross rail relative to the support structure.

Preferably each of the at least one connection portion extends at substantially 90° from the body portion. Preferably each of the at least one connection portion extends from a respective one of the two opposed sides of the body portion. Preferably the at least one connection portion is two connection portions. Preferably the two connection portions are opposed to one another. Preferably the two opposed connection portions extend from the two opposed sides of the body portion. Preferably each of the at least one connection portion is substantially planar.

Preferably each of the two opposed connection positions are defined by two opposed notches. Preferably the opposed notches are adapted to retain therein lips of a furring channel. Preferably each of the two opposed connection positions is located between 2mm to 45mm away from the body portion of the clip. More preferably, each of the two opposed connection positions is located between 5mm to 30mm away from the body portion of the clip. In one embodiment, each of the two opposed connection positions is located substantially 10mm away from the body portion of the clip. In another embodiment, each of the two opposed connection positions is located substantially 15mm away from the body portion of the clip. In a further embodiment, each of the two opposed connection positions is located substantially 20mm away from the body portion of the clip. In yet another embodiment, each of the two opposed connection positions is located substantially 25mm away from the body portion of the clip.

Preferably the clip is made from metal. Preferably the metal is bent or pressed into the shape of the clip. Preferably the metal is steel. Preferably the thickness of the metal is in the range of 0.5mm to 1.5mm. More preferably the thickness of the metal is substantially 1mm.

The insulation member preferably includes elastic material to inhibit or reduce vibrations from passing therethrough. The insulation member preferably includes resilient material to inhibit or reduce vibrations from passing therethrough. The insulation member preferably includes a rubber or plastic material to inhibit or reduce vibrations from passing therethrough. More preferably the insulation member includes a rubber material to inhibit or reduce vibrations from passing therethrough.

In one embodiment, the insulation member is made by extrusion. In another embodiment, the insulation member is made by moulding or casting.

The bed portion is preferably substantially rectangular in shape. Preferably the bed portion includes an aperture. Preferably, the aperture of the bed portion aligns with an aperture of the clip in use. Preferably in use, a fastener such as a screw or a bolt can be inserted into the aperture of the bed portion and the aperture of the clip to secure the clip to a cross rail.

Preferably in use, when the clip is attached relative to a cross rail, the bed portion is located between the clip and the cross rail.

In one embodiment, the insulation member includes a grommet extending from the bed portion. Preferably an aperture in the grommet defines the aperture in the bed portion. Preferably the grommet is adapted to be at least partially inserted into the aperture of the body portion.

The grommet preferably includes elastic material to inhibit or reduce vibrations from passing therethrough. The grommet preferably includes resilient material to inhibit or reduce vibrations from passing therethrough. The grommet preferably includes a rubber or plastic material to inhibit or reduce vibrations from passing therethrough. More preferably the grommet includes a rubber material to inhibit or reduce vibrations from passing therethrough.

Preferably in use, the plurality of projections extend in a direction away from the clip. Preferably the plurality of projections extend at substantially 90° from the bed portion. Preferably the plurality of projections extend in substantially the opposite direction compared to the two opposed skirt portions. Preferably in use the plurality of projections provide additional insulation between a clip and a support member to which the clip is attached. In one embodiment, the plurality of projections are ribs. Preferably the ribs are parallel to one another. In another embodiment, the plurality of projections are knobs, nibs or lugs.

In one embodiment, the plurality of projections are between 3 and 16 projections. Preferably the plurality of projections are between 6 and 10 projections. More preferably the plurality of projections are 8 projections.

Preferably the two opposed skirt portions each define a recess to receive an end of the clip to hold the clip insulation in place on the clip. In one embodiment, each recess is defined between a corresponding skirt portion and the bed portion. Preferably each skirt portion is adapted to straddle an end of the clip to hold the insulation member in place on the clip.

Preferably each of the two opposed skirt portions extends at substantially 90° from the bed portion.

Preferably each of the two opposed skirt portions includes a ramp portion. Preferably each ramp portion aids in guiding an end of the clip into a corresponding recess.

In a further aspect, the present invention broadly resides in a clip assembly for mounting a furring channel to a support structure, the clip assembly having
a cross rail attachable relative to the support structure, the cross rail having two parallel channels;
a slide member receivable within the two parallel channels;
a clip having
   a body portion attachable relative to the slide member, the body portion having two opposed sides and two opposed ends; and
   two opposed connection portion extending transversely from corresponding sides of the body portion, each of the connection portions having two opposed connection positions adapted to connect to the furring channel;
      and
a clip insulation locatable between the clip and the cross rail, the clip insulation having
a substantially planar bed portion having two opposed ends, the bed portion adapted to at least cover a portion of an outer surface of the body portion of the clip;
a plurality of projections extending from the bed portion; and
two opposed skirt portions, each skirt portion extending from an end of the bed portion, each skirt portion adapted to attach to an end of the clip.

Preferably in use, when the body portion is attached relative to the cross rail, the bed portion and the plurality of projections are located between the cross rail and the clip.

The clip is preferably a clip as described in this specification.

The clip insulation is preferably a clip insulation as described in this specification.

In another aspect, the present invention broadly resides in a clip assembly for mounting a furring channel to a support structure, the clip assembly having
a cross rail attachable relative to the support structure, the cross rail having two parallel channels;
a slide member receivable within the two parallel channels;
a clip having
   a body portion attachable relative to the slide member, the body portion having two opposed sides and two opposed ends; and
   two opposed connection portion extending transversely from corresponding sides of the body portion, each of the connection portions having two opposed connection positions adapted to connect to the furring channel; and
a clip insulation locatable between the clip and the cross rail.

In a further aspect, the present invention broadly resides in a clip assembly for mounting a furring channel to a support structure, the clip assembly having
a cross rail attachable relative to the support structure, the cross rail having two parallel channels;
a slide member receivable within the two parallel channels;
a clip having
   a body portion attachable relative to the slide member; and at least one connection portion extending transversely from the body portion, each of the at least one connection portion has two opposed connection positions adapted to connect to the furring channel; and
a clip insulation locatable between the clip and the cross rail.

### BRIEF DESCRIPTION OF THE DRAWINGS

In order that the present invention can be more readily understood reference will now be made to the accompanying drawings which illustrate a preferred embodiment of the invention and wherein:
Figure 1 is a perspective view of a clip assembly according to an embodiment of the present invention;
Figure 2 is a rear perspective view of the clip assembly of Figure 1;
Figure 3 is a side view of the clip assembly of Figure 1;
Figure 4 is an exploded view of the clip assembly of Figure 1;
Figure 5 is a perspective view of a clip insulation according to an embodiment of the present invention;
Figure 6 is a rear perspective view of the clip insulation of Figure 5;
Figure 7 is a side view of the clip assembly of Figure 5;
Figure 8 is a perspective view of a clip assembly according to an embodiment of the present invention;
Figure 9 is a rear perspective view of the clip assembly of Figure 8;
Figure 10 is an exploded view of the clip assembly of Figure 8;
Figure 11 is a top view of the clip assembly of Figure 8;
Figure 12 is a bottom view of the clip assembly of Figure 8;
Figure 13 is a side view of the clip assembly of Figure 8; and
Figure 14 is an end view of the clip assembly of Figure 8.

### DETAILED DESCRIPTION OF THE PREFERRED EMBODIMENT

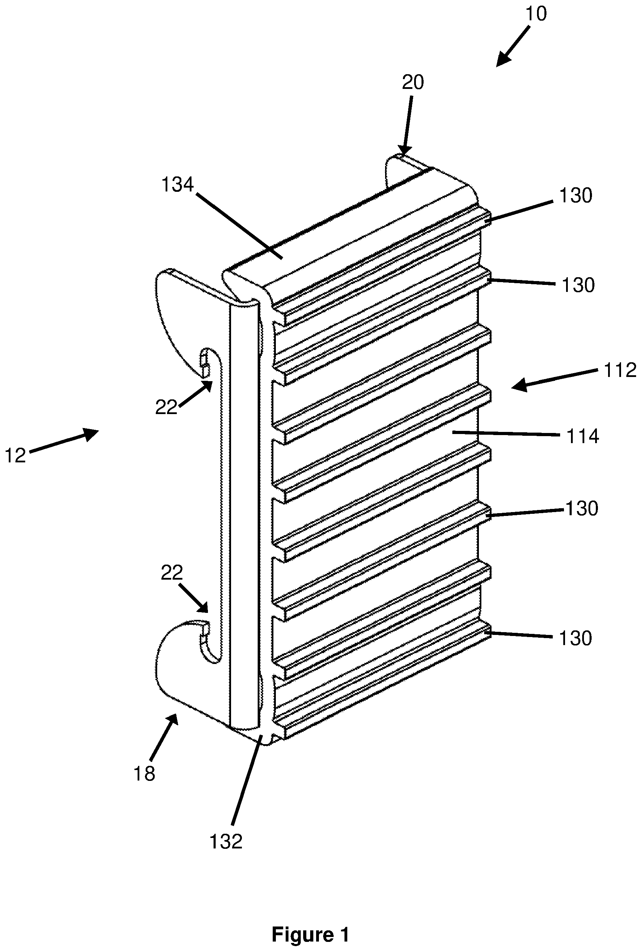

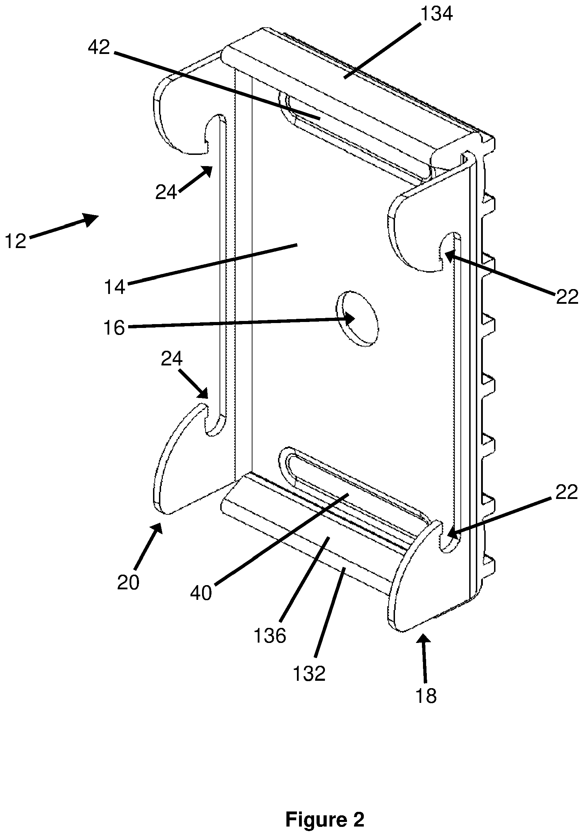

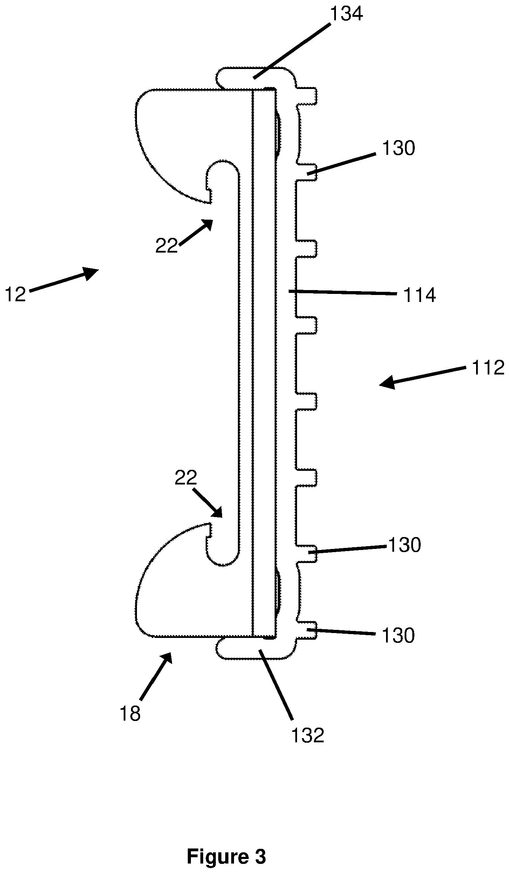

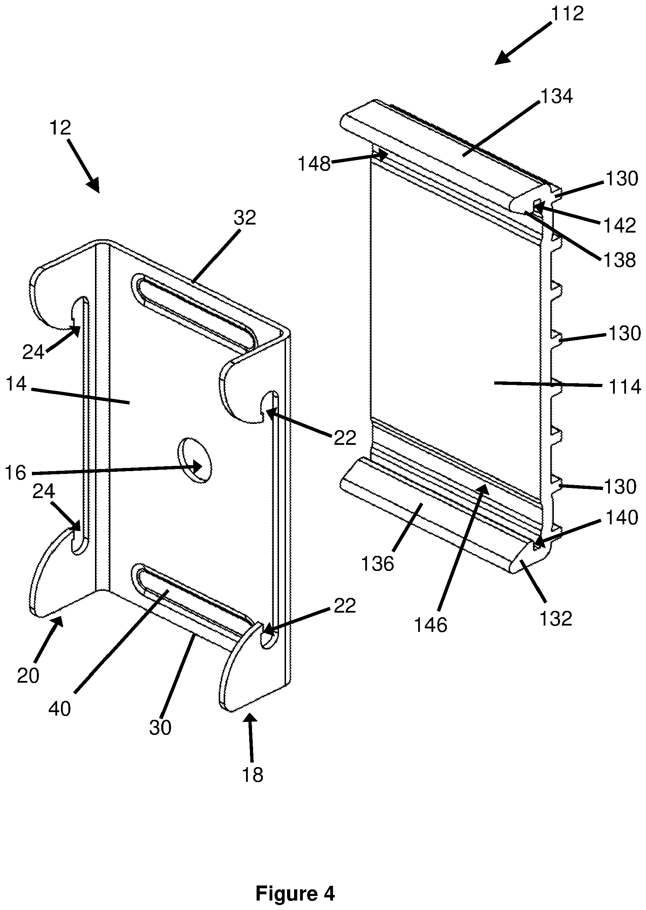

With reference to Figures 1 to 4, there is shown a clip assembly 10 according to an embodiment of the present invention. The clip assembly 10 includes a clip 12. The clip assembly includes an insulation member 112 to partially cover the clip.

The clip 12 has a body portion 14. The body portion 14 is planar and substantially rectangular. The body portion has an aperture 16 located therethrough. The aperture 16 is adapted to attach the clip assembly 10 to a support structure (not shown) via a fastener (not shown) as will be explained in more detail below.

Two opposed connection portions 18,20 extend at substantially 90° from sides of the body portion 14. Each of the two connection portions 18,20 has two opposed connection positions in the form of recesses 22,24. The recesses 22,24 are adapted to connect to a furring channel (not shown).

The insulation member 112 is made from rubber to inhibit vibrations from passing therethrough.

The insulation member 112 has a bed portion 114. The bed portion 114 is adapted to at least cover a portion of the outer surface of the body portion 14 of the clip 12.

The bed portion 114 has a plurality of projections in the form of ribs 130 extending therefrom.

Skirt portions 132,134 extend at substantially 90° from ends of the body portion 14. Each skirt portion 132,134 is adapted to attach to an end of the body portion 14 of the clip 12 to hold the insulation member 112 in place on the clip 12. Each skirt portion 132,134 has a ramp portion 136,138. The ramp portions 136,138 assist in locating part of each skirt portion 132,134 over ends 30,32 of the body portion 14 of the clip 12.

The skirt portions 132,134 define recesses 140,142. Ends 30,32 of the body portion 14 of the clip 12 are received in the recesses 140,142 to hold the insulation member 112 in place on the clip 12.

In use, when the body portion 14 of the clip is attached relative to a support structure (not shown), the bed portion 114 and the ribs 130 are located between the body portion 14 and the support structure, inhibit vibration from traveling from the support structure through the clip 12 into a furring channel (not shown) and into wall or ceiling cladding (not shown) attached to the furring channel.

The bed portion 114 has two furrows 146,148. The furrows 146,148 receive corresponding ridges 40,42 (reverse side shown) of the clip 12.

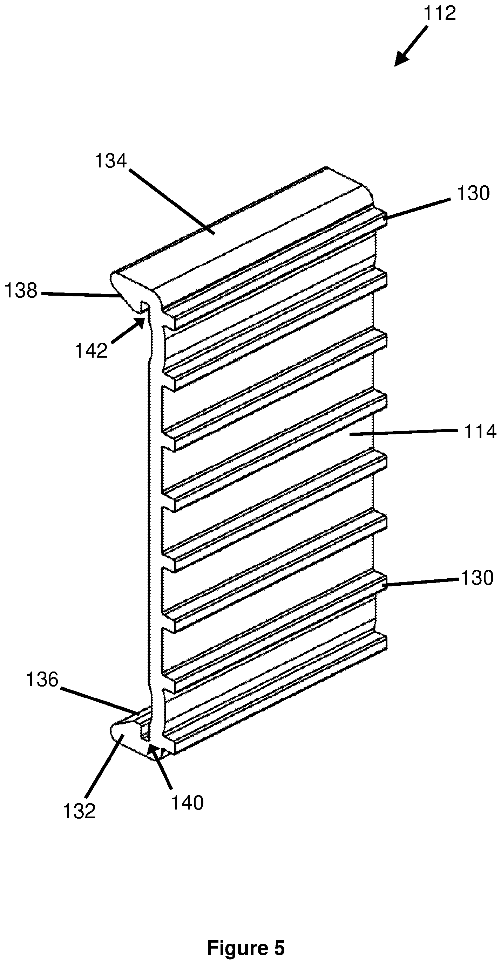

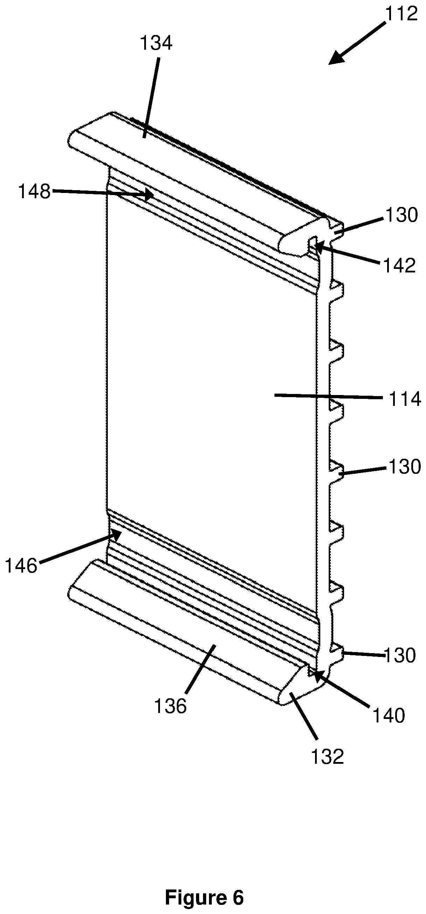

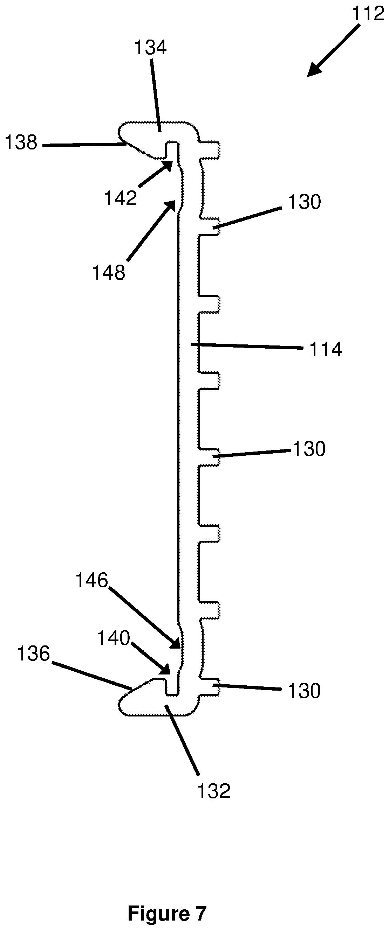

With reference to Figures 5 to 7, there is shown the insulation member 112 of the clip assembly 10 of Figures 1 to 4 in more detail.

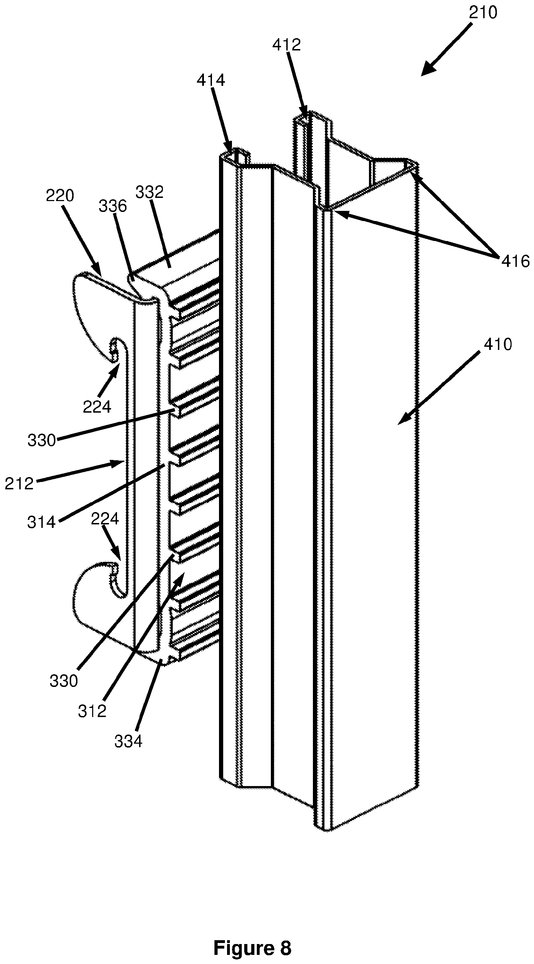

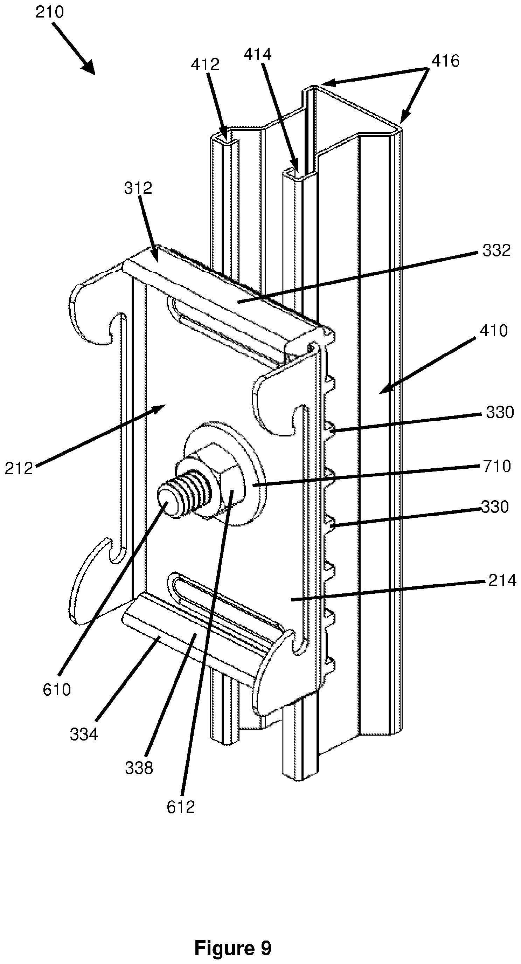

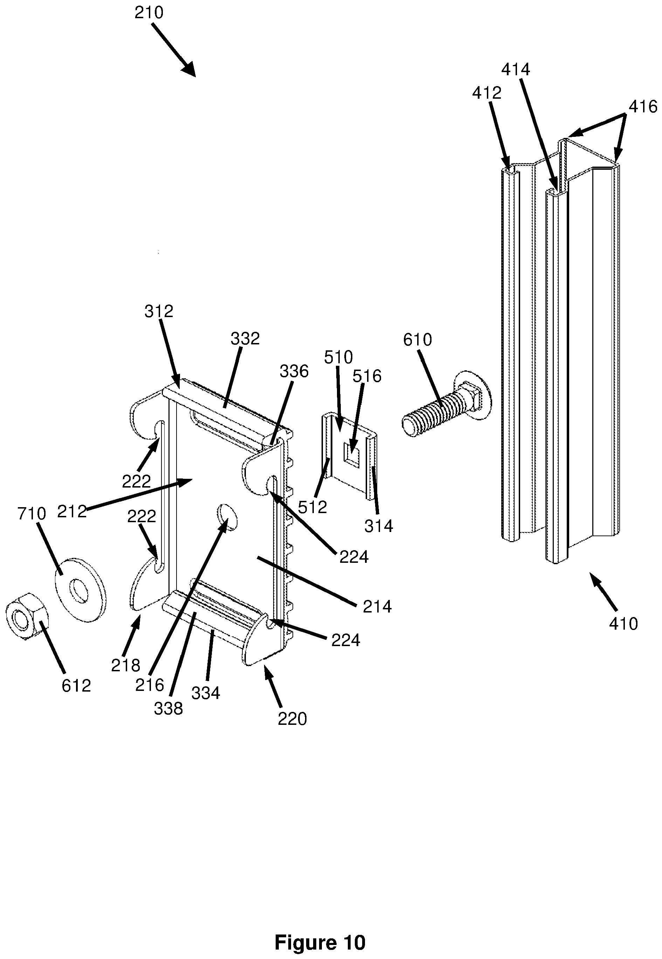

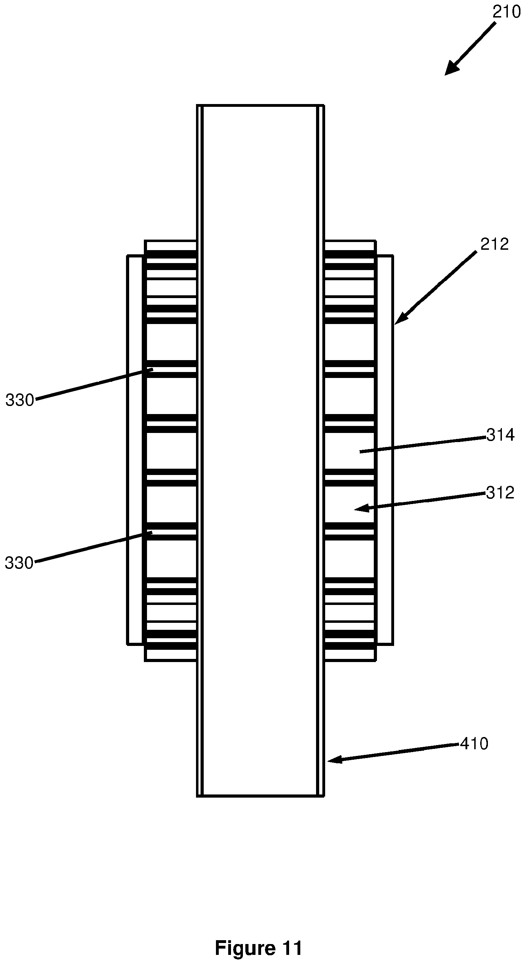

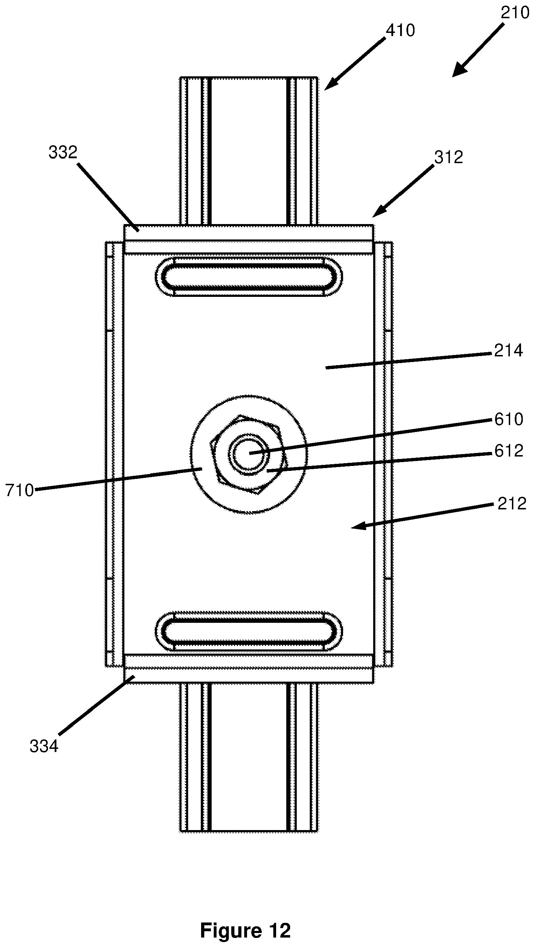

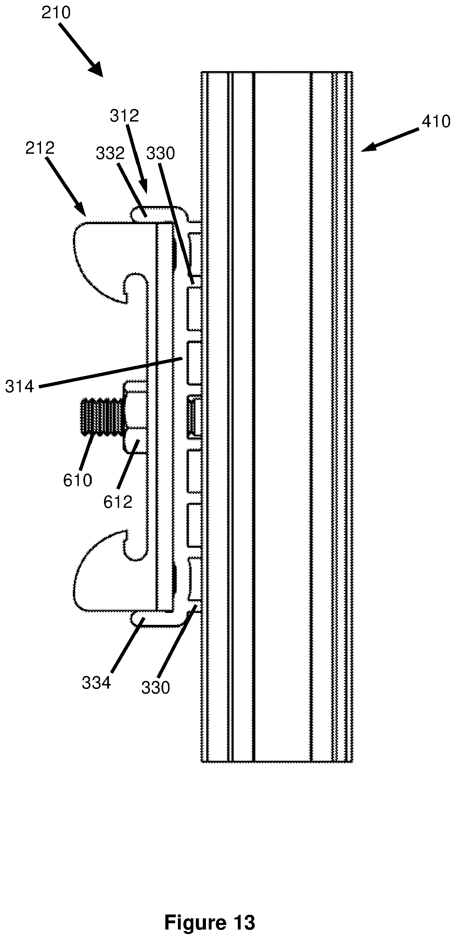

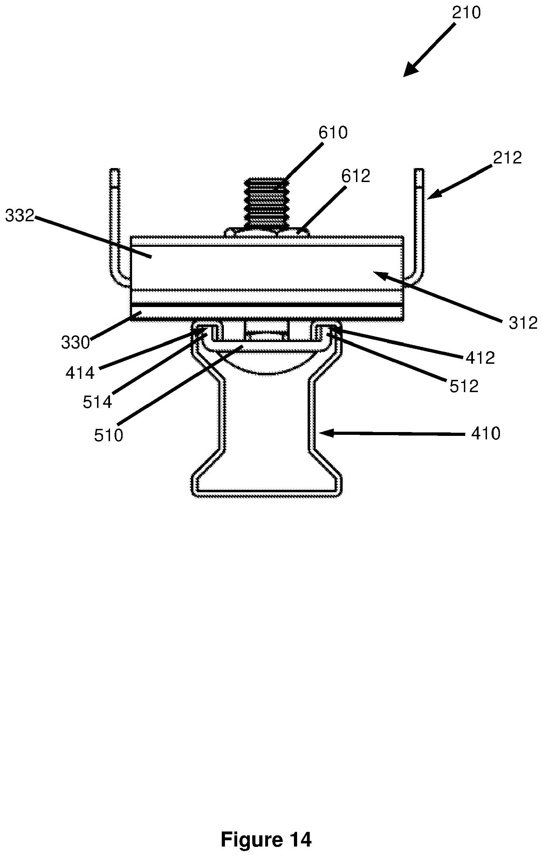

With reference to Figures 8 to 14, there is shown a clip assembly 210 according to an embodiment of the present invention. The clip assembly 210 includes a clip 212. The clip assembly includes an insulation member 312 to partially cover the clip. The clip assembly 210 includes a cross rail 410 to which the clip 212 is attachable via a slide member 510 locatable within the cross rail 410. The slide member 510 is attachable to the clip 212 by a fastener in the form of a bolt 610 which is secured by a nut 612.

The clip 212 has a body portion 214. The body portion 214 is planar and substantially rectangular. The body portion has an aperture 216 located therethrough. The aperture 216 is adapted to attach the clip assembly 210 to the cross rail 410 via the slide member 510 and the fastener 610.

Two opposed connection portions 218,220 extend at substantially 90° from sides of the body portion 214. Each of the two connection portions 218,220 has two opposed connection positions in the form of recesses 222,224. The recesses 222,224 are adapted to connect to a furring channel (not shown).

The insulation member 312 is made from rubber to inhibit vibrations from passing therethrough.

The insulation member 312 has a bed portion 314. The bed portion 314 is adapted to at least cover a portion of the outer surface of the body portion 214 of the clip 212.

The bed portion 314 has a plurality of projections in the form of ribs 330 extending therefrom.

Skirt portions 332,334 extend at substantially 90° from ends of the bed portion 314. Each skirt portion 332,334 is adapted to attach to an end of the body portion 214 of the clip 212 to hold the insulation member 312 in place on the clip 212. Each skirt portion 332,334 has a ramp portion 336,338. The ramp portions 336,338 assist in locating part of each skirt portion 332,334 over ends of the body portion 214 of the clip 212.

The skirt portions 332,334 define recesses. Ends of the body portion 214 of the clip 212 are received in the recesses to hold the insulation member 312 in place on the clip 212.

The cross rail 410 has two parallel channels 412,414 into which leg portions 512,514 of the slide member 510 are received. The cross rail 410 also has an enlarged cross section 416. The enlarged cross section 416 is adapted to be attached to a suspension clip (not shown) to secure the cross rail 410 to a support structure (not shown).

The slide member 510 has an aperture 516. The aperture 516 is shaped to retain a portion of the bolt 610 therein to prevent the bolt 610 from rotating relative to the slide member 510.

A washer 710 inhibits vibration from traveling from the bolt 610 and nut 612 into the clip 212.

In use, when the body portion 214 of the clip 212 is attached via the slide member 510 to the cross rail 410, and the fastener is tightened, the bed portion 314 and the ribs 330 are located between the body portion 214 and the cross rail 410, inhibiting vibration from traveling from the cross rail 410 through the clip 212 into a furring channel (not shown) and into ceiling cladding (not shown) attached to the furring channel. Prior to the fastener 610 being tightened, the clip 212 and slide member 510 are movable relative to the cross rail 410 to a desired position. When the fastener is tightened, the bed portion 314 and the ribs 330 are compressed between the body portion 214 and the cross rail 410, securing the clip 212 in position relative to the cross rail 410.

### ADVANTAGES

An advantage of the preferred embodiment of the clip insulation includes the ability to further distance a clip from a support structure. Another advantage of the preferred embodiment of the clip insulation includes the ability to inhibit vibrations from traveling from a support structure to a furring channel. A further advantage of the preferred embodiment of the clip assembly includes preventing direct contact between the clip and a fastener securing the clip to a support structure.

Throughout the description and claims of this specification the word "comprise" and variations of that word such as "comprises" and "comprising", are not intended to exclude other additives, components, integers or steps.

## Claims

1. A clip assembly (210) for mounting a furring channel to a support structure, the clip assembly (210) having
a clip (212) having
a body portion (214) attachable relative to the support structure; and
at least one connection portion (218) extending transversely from the body portion (214), each of the at least one connection portion (218) has two opposed connection positions (222) adapted to connect to the furring channel;
wherein the clip assembly (210) has
a clip insulation (312) locatable between the clip (210) and the support structure, **characterised in that**
the clip insulation (312) has
a substantially planar bed portion (314) having two opposed ends, the bed portion adapted to at least cover a portion of an outer surface of the clip (210);
a plurality of projections (330) extending from the bed portion (314); and
two opposed skirt portions (332,334), each skirt portion (332,334) extending from an end of the bed portion (314), each skirt portion (332,334) adapted to attach to an end of the clip (110).

2. A clip assembly (210) as claimed in claim 1, wherein the body portion (214) includes an aperture (216) adapted to receive a fastener (610) to attach the body portion (214) relative to the support structure, and further including a grommet, wherein the aperture (216) is adapted to receive the grommet to prevent direct contact between the body portion (214) of the clip (110) and the fastener (610).

3. A clip assembly (210) as claimed in any one of the preceding claims, wherein the at least one connection portion (218) is two connection portions (218/220), the two connection portions (218/220) being opposed to one another, and extending from two opposed sides of the body portion (214), and wherein each of the two opposed connection positions (218/220) are defined by two opposed notches, the opposed notches adapted to retain therein lips of a furring channel.

4. A clip insulation (312) for a clip assembly (210) as claimed in any one of the preceding claims, the clip insulation (312) having
a substantially planar bed portion (314) having two opposed ends, the bed portion (314) adapted to at least cover a portion of an outer surface of the clip (212);
a plurality of projections (130) extending from the bed portion (314); and
two opposed skirt portions (132,134), each skirt portion (132,134) extending from an end of the bed portion (314), each skirt portion (132,134) adapted to attach to an end of the clip (212).

5. A clip insulation (312) as claimed in claim 4, the two opposed skirt portions (132,134) extends at substantially 90° from the bed portion (314) and each of the two opposed skirt portions (132,134) defines a recess (140,142) to receive an end of the clip (212) to hold the clip insulation (312) in place on the clip (212), and wherein the plurality of projections (130) extend at substantially 90° from the bed portion (314) and the plurality of projections (130) are ribs.

6. A clip insulation (312) as claimed in claim 4 or 5, wherein the bed portion (314) includes an aperture (216), and wherein in use the aperture (216) of the bed portion (314) aligns with an aperture (216) of the clip (212) and a fastener (610) can be inserted into the aperture (216) of the bed portion (314) and the aperture (216) of the clip (212) to secure the clip (212) to a support structure, and wherein the insulation member (312) includes a grommet extending from the bed portion (314), the grommet defining the aperture in the bed portion (314), and wherein the grommet is adapted to be at least partially inserted into the aperture of the clip (212).

7. A clip insulation (312) or a clip assembly (210) as claimed in any one of the preceding claims, wherein the insulation member (312) includes an elastic material to inhibit or reduce vibrations from passing therethrough.

8. A clip assembly (210) as claimed in claim 1 for mounting a furring channel to a support structure, the clip assembly (210) having
a cross rail (410) attachable relative to the support structure, the cross rail (410) having two parallel channels (412,414); and
a slide member (510) receivable within the two parallel channels (412,414).

9. A clip assembly (210) as claimed in claim 8, wherein a fastener (610) is used to attach the clip (212) relative to the slide member (510), and wherein tightening the fastener (610) causes the clip insulation (312) to be compressed between the clip (212) and the cross rail (410), securing the clip (212) to the cross rail (510), and wherein the slide member (510) includes an aperture (516), and the body portion (214) of the clip (212) includes an aperture (216), and wherein the apertures (516) of the slide member (510) and the body portion (214) of the clip (212) are adapted to receive the fastener (610) that attaches the clip (212) relative to the cross rail (410).

10. A clip assembly (210) as claimed in claim 9, wherein the aperture (516) of the slide member (510) is a threaded aperture (516), the threaded aperture (516) adapted to receive a threaded shaft of the fastener (610).

11. A clip assembly (210) as claimed in claim 9, wherein the aperture (516) of the slide member (510) is shaped to prevent rotation of the fastener (610) therein.

12. A clip assembly (210) as claimed in any one of claims 7 to 11, wherein the insulation member (312) includes an elastic material to inhibit or reduce vibrations from passing therethrough.

13. A clip assembly (210) as claimed in claim 9, wherein the insulation member (312) includes a grommet extending from the bed portion (314), an aperture in the grommet defines an aperture (216) in the bed portion (314), and wherein the grommet is adapted to be at least partially inserted into the aperture (216) of the body portion (314) of the clip (110), and wherein the grommet prevents direct contact between the clip (110) and the fastener (610).

14. A clip insulation (312) or a clip assembly (210) as claimed in any one of the preceding claims, wherein the clip (110) is made from metal having a thickness in the range of 0.5mm to 1.5mm.

## Patentansprüche

1. Clip-Anordnung (210) zum Befestigen eines Unterkonstruktionsprofils an einer Tragstruktur, wobei die Clip-Anordnung (210) aufweist:
einen Clip (212) mit
einem Körperabschnitt (214), der relativ zur Tragstruktur befestigbar ist, und wenigstens einem Verbindungsabschnitt (218), der sich quer von dem Körperabschnitt (214) erstreckt, wobei jeder des wenigstens einen Verbindungsabschnitts (218) zwei gegenüberliegende Verbindungspositionen (222) aufweist, die zur Verbindung mit dem Unterkonstruktionsprofil ausgebildet sind,
wobei die Clip-Anordnung (210) eine Clip-Isolierung (312) aufweist, die zwischen dem Clip (210) und der Tragstruktur anordenbar ist,
**dadurch gekennzeichnet, dass**
die Clip-Isolierung (312) aufweist:
einen im Wesentlichen ebenen Bettabschnitt (314) mit zwei gegenüberliegenden Enden, wobei der Bettabschnitt dazu ausgebildet ist, zumindest einen Teil einer Außenfläche des Clips (210) abzudecken,
eine Vielzahl von Vorsprüngen (330), die sich von dem Bettabschnitt (314) erstrecken, und
zwei gegenüberliegende Blendenabschnitte (332, 334), wobei sich jeder Blendenabschnitt (332, 334) von einem Ende des Bettabschnitts (314) erstreckt, wobei jeder Blendenabschnitt (332, 334) zur Befestigung an einem Ende des Clips (110) ausgebildet ist.

2. Clip-Anordnung (210) nach Anspruch 1, wobei der Körperabschnitt (214) eine Öffnung (216) umfasst, die dazu ausgebildet ist, ein Befestigungselement (610) aufzunehmen, um den Körperabschnitt (214) in Bezug auf die Tragstruktur zu befestigen, und weiter eine Tülle umfassend, wobei die Öffnung (216) dazu ausgebildet ist, die Tülle aufzunehmen, um einen direkten Kontakt zwischen dem Körperabschnitt (214) des Clips (110) und dem Befestigungselement (610) zu verhindern.

3. Clip-Anordnung (210) nach einem der vorhergehenden Ansprüche, wobei der wenigstens eine Verbindungsabschnitt (218) zwei Verbindungsabschnitte (218/220) ist, wobei die zwei Verbindungsabschnitte (218/220) einander gegenüberliegen und sich von zwei gegenüberliegenden Seiten des Körperabschnitts (214) erstrecken, und wobei jede der beiden gegenüberliegenden Verbindungspositionen (218/220) durch zwei gegenüberliegende Kerben definiert ist, wobei die gegenüberliegenden Kerben dazu ausgebildet sind, Lippen eines Unterkonstruktionsprofils darin festzuhalten.

4. Clip-Isolierung (312) für eine Clip-Anordnung (210) nach einem der vorhergehenden Ansprüche, wobei die Clip-Isolierung (312) aufweist:
einen im Wesentlichen ebenen Bettabschnitt (314) mit zwei gegenüberliegenden Enden, wobei der Bettabschnitt (314) dazu ausgebildet ist, zumindest einen Teil einer Außenfläche des Clips (212) abzudecken,
eine Vielzahl von Vorsprüngen (130), die sich vom Bettabschnitt (314) erstrecken, und
zwei gegenüberliegende Blendenabschnitte (132, 134), wobei sich jeder Blendenabschnitt (132, 134) von einem Ende des Bettabschnitts (314) erstreckt, wobei jeder Blendenabschnitt (132, 134) zur Befestigung an einem Ende des Clips (212) ausgebildet ist.

5. Clip-Isolierung (312) nach Anspruch 4, wobei sich die beiden gegenüberliegenden Blendenabschnitte (132, 134) im Wesentlichen mit 90° vom Bettabschnitt (314) erstrecken und jeder der beiden gegenüberliegenden Blendenabschnitte (132, 134) eine Aussparung (140, 142) begrenzt, um ein Ende des Clips (212) aufzunehmen, um die Clip-Isolierung (312) auf dem Clip (212) an Ort und Stelle zu halten, und wobei sich die Vielzahl von Vorsprüngen (130) im Wesentlichen mit 90° von dem Bettabschnitt (314) erstreckt und die Vielzahl von Vorsprüngen (130) Rippen sind.

6. Clip-Isolierung (312) nach Anspruch 4 oder 5, wobei der Bettabschnitt (314) eine Öffnung (216) umfasst und wobei die Öffnung (216) des Bettabschnitts (314) bei Gebrauch mit einer Öffnung (216) des Clips (212) ausgerichtet ist und ein Befestigungselement (610) in die Öffnung (216) des Bettabschnitts (314) und die Öffnung (216) des Clips (212) eingeführt werden kann, um den Clip (212) an einer Tragstruktur zu befestigen, und wobei das Isolierelement (312) eine sich vom Bettabschnitt (314) erstreckende Tülle umfasst, wobei die Tülle eine Öffnung im Bettabschnitt (314) begrenzt, und wobei die Tülle dazu ausgebildet ist, zumindest teilweise in die Öffnung des Clips (212) eingeführt zu werden.

7. Clip-Isolierung (312) oder Clip-Anordnung (210) nach einem der vorhergehenden Ansprüche, wobei das Isolierelement (312) ein elastisches Material umfasst, um das Hindurchleiten von Vibrationen zu verhindern oder zu reduzieren.

8. Clip-Anordnung (210) nach Anspruch 1 zum Befestigen eines Unterkonstruktionsprofils an einer Tragstruktur, wobei die Clip-Anordnung (212) aufweist:
eine Querschiene (410), die in Bezug auf die Tragstruktur befestigbar ist, wobei die Querschiene (410) zwei parallele Kanäle (412, 414) aufweist, und
ein Gleitelement (510), das in den beiden parallelen Kanälen (412, 414) aufnehmbar ist.

9. Clip-Anordnung (210) nach Anspruch 8, wobei das Befestigungselement (610) verwendet wird, um den Clip (212) bezüglich des Gleitelements (510) zu befestigen, und wobei das Anziehen des Befestigungselements (610) dazu führt, dass die Clip-Isolierung (312) zwischen dem Clip (212) und der Querschiene (510) zusammengedrückt wird, wodurch der Clip (212) an der Querschiene (410) befestigt wird, und wobei das Gleitelement (510) eine Öffnung (516) aufweist und der Körperabschnitt (214) des Clips eine Öffnung (216) aufweist, und wobei die Öffnungen (516) des Gleitelements (510) und des Körperabschnitts (214) des Clips (212) dazu ausgebildet sind, das Befestigungselement (610) aufzunehmen, das den Clip (212) bezüglich der Querschiene (410) befestigt.

10. Clip-Anordnung nach Anspruch 10, wobei die Öffnung (516) des Gleitelements (510) eine Gewindeöffnung (516) ist, wobei die Gewindeöffnung (516) zur Aufnahme eines Gewindeschafts des Befestigungselements (610) ausgebildet ist.

11. Clip-Anordnung (210) nach Anspruch 9, wobei die Öffnung (516) des Gleitelements (510) so geformt ist, dass sie eine Drehung des Befestigungselements (610) darin verhindert.

12. Clip-Anordnung (210) nach einem der Ansprüche 7 bis 11, wobei das Isolierelement (312) ein elastisches Material umfasst, um das Hindurchleiten von Vibrationen zu verhindern oder zu reduzieren.

13. Clip-Anordnung (210) nach Anspruch 9, wobei das Isolierelement (312) eine sich von dem Bettabschnitt (314) erstreckende Tülle umfasst, wobei eine Öffnung in der Tülle eine Öffnung (216) in dem Bettabschnitt (314) definiert, und wobei die Tülle dazu ausgebildet ist, zumindest teilweise in die Öffnung (216) des Körperabschnitts (314) des Clips (212) eingeführt zu werden, und wobei die Tülle einen direkten Kontakt zwischen dem Clip (110) und dem Befestigungselement (610) verhindert.

14. Clip-Isolierung (312) oder Clip-Anordnung (210) nach einem der vorhergehenden Ansprüche, wobei der Clip (110) aus Metall mit einer Dicke im Bereich von 0,5 mm bis 1,5 mm besteht.

## Revendications

1. Ensemble étrier (210) pour assembler un profilé de fourrure à une structure de support, l'ensemble étrier (210) comportant
un étrier (212) comportant
une partie de corps (214) pouvant être attachée par rapport à la structure de support ; et
au moins une partie de raccordement (218) s'étendant transversalement à partir de la partie de corps (214), chacune de l'au moins une partie de raccordement (218) comporte deux positions de raccordement opposées (222) adaptées pour se raccorder au profilé de fourrure ;
dans lequel l'ensemble étrier (210) comporte une isolation d'étrier (312) pouvant être placée entre l'étrier (210) et la structure de support, **caractérisé en ce que** l'isolation d'étrier (312) comporte
une partie de cale sensiblement plane (314) comportant deux extrémités opposées, la partie de cale adaptée pour au moins recouvrir une partie d'une surface extérieure de l'étrier (210) ;
une pluralité de saillies (330) s'étendant depuis la partie de cale (314) ; et
deux parties de jupe opposées (332,334), chaque partie de jupe (332,334) s'étendant depuis une extrémité de la partie de cale (314), chaque partie de jupe (332,334) étant adaptée pour s'attacher à une extrémité de l'étrier (110).

2. Ensemble étrier (210) selon la revendication 1, dans lequel la partie de corps (214) comprend une ouverture (216) adaptée pour recevoir une fixation (610) pour attacher la partie de corps (214) par rapport à la structure de support, et comprenant en outre un oeillet, dans lequel l'ouverture (216) est adaptée pour recevoir l'oeillet afin d'empêcher un contact direct entre la partie de corps (214) de l'étrier (110) et la fixation (610).

3. Ensemble étrier (210) selon l'une quelconque des revendications précédentes, dans lequel l'au moins une partie de raccordement (218) est deux parties de raccordement (218/220), les deux parties de raccordement (218/220) étant opposées l'une à l'autre, et s'étendant à partir de deux côtés opposés de la partie de corps (214), et dans lequel chacune des deux positions de raccordement opposées (218/220) est définie par deux encoches opposées, les encoches opposées étant adaptées pour retenir dans celles-ci les lèvres d'un profilé de fourrure.

4. Isolation d'étrier (312) pour un ensemble étrier (210) selon l'une quelconque des revendications précédentes, l'isolation d'étrier (312) comportant
une partie de cale sensiblement plane (314) comportant deux extrémités opposées, la partie de cale (314) adaptée pour au moins recouvrir une partie d'une surface extérieure de l'étrier (212) ;
une pluralité de saillies (130) s'étendant depuis la partie de cale (314) ; et
deux parties de jupe opposées (132, 134), chaque partie de jupe (132, 134) s'étendant depuis une extrémité de la partie de cale (314), chaque partie de jupe (132, 134) étant adaptée pour s'attacher à une extrémité de l'étrier (212).

5. Isolation d'étrier (312) selon la revendication 4, les deux parties de jupe opposées (132, 134) s'étendent sensiblement à 90° de la partie de cale (314) et chacune des deux parties de jupe opposées (132, 134) définit un évidement (140, 142) pour recevoir une extrémité de l'étrier (212) pour maintenir l'isolation d'étrier (312) en place sur l'étrier (212), et dans lequel la pluralité de saillies (130) s'étendent sensiblement à 90° de la partie de cale (314) et la pluralité de saillies (130) sont des nervures.

6. Isolation d'étrier (312) selon la revendication 4 ou 5, dans laquelle la partie de cale (314) comprend une ouverture (216), et dans lequel, en utilisation, l'ouverture (216) de la partie de cale (314) s'aligne avec une ouverture (216) de l'étrier (212) et une fixation (610) peut être insérée dans l'ouverture (216) de la partie de cale (314) et l'ouverture (216) de l'étrier (212) pour fixer l'étrier (212) à une structure de support, et dans laquelle l'élément d'isolation (312) comprend un oeillet s'étendant depuis la partie de cale (314), l'oeillet définissant l'ouverture dans la partie de cale (314), et dans lequel l'oeillet est adapté pour être au moins partiellement inséré dans l'ouverture de l'étrier (212).

7. Isolation d'étrier (312) ou ensemble étrier (210) selon l'une quelconque des revendications précédentes, dans lequel l'élément d'isolation (312) comprend un matériau élastique pour empêcher ou réduire les vibrations de le traverser.

8. Ensemble étrier (210) selon la revendication 1 pour assembler un profilé de fourrure à une structure de support, l'ensemble étrier (210) comportant
un rail transversal (410) pouvant être attaché par rapport à la structure de support, le rail transversal (410) comportant deux profilés parallèles (412,414) ; et
un élément coulissant (510) pouvant être reçu à l'intérieur des deux profilés parallèles (412,414).

9. Ensemble étrier (210) selon la revendication 8, dans lequel une fixation (610) est utilisée pour attacher l'étrier (212) par rapport à l'élément coulissant (510), et dans lequel le serrage de la fixation (610) entraîne la compression de l'isolation d'étrier (312) entre l'étrier (212) et le rail transversal (410), fixant l'étrier (212) au rail transversal (510), et dans lequel l'élément coulissant (510) comprend une ouverture (516), et la partie de corps (214) de l'étrier (212) comprend une ouverture (216), et dans lequel les ouvertures (516) de l'élément coulissant (510) et la partie de corps (214) de l'étrier (212) sont adaptées pour recevoir la fixation (610) qui attache l'étrier (212) par rapport au rail transversal (410).

10. Ensemble étrier (210) selon la revendication 9, dans lequel l'ouverture (516) de l'élément coulissant (510) est une ouverture filetée (516), l'ouverture filetée (516) étant adaptée pour recevoir une tige filetée de la fixation (610).

11. Ensemble étrier (210) selon la revendication 9, dans lequel l'ouverture (516) de l'élément coulissant (510) est formée pour empêcher la rotation de la fixation (610) dans celle-ci.

12. Ensemble étrier (210) selon l'une quelconque des revendications 7 à 11, dans lequel l'élément d'isolation (312) comprend un matériau élastique pour empêcher ou réduire les vibrations de le traverser.

13. Ensemble étrier (210) selon la revendication 9,
dans lequel l'élément d'isolation (312) comprend un oeillet s'étendant depuis la partie de cale (314), une ouverture dans l'oeillet définit une ouverture (216) dans la partie de cale (314), et dans lequel l'oeillet est adapté pour être au moins partiellement inséré dans l'ouverture (216) de la partie de corps (314) de l'étrier (110), et dans lequel l'oeillet empêche un contact direct entre l'étrier (110) et la fixation (610).

14. Isolation d'étrier (312) ou ensemble étrier (210) selon l'une quelconque des revendications précédentes, dans lequel l'étrier (110) est fabriqué en métal comportant une épaisseur dans la plage de 0,5 mm à 1,5 mm.
